# EUROPÄISCHE PATENTSCHRIFT

(11) **EP 1 744 928 B1**
(45) Veröffentlichungstag und Bekanntmachung des Hinweises auf die Patenterteilung: **02.09.2009**
(21) Anmeldenummer: 05739877.8
(22) Anmeldetag: 03.05.2005
(51) Int. Cl.: B60N 2/14, B60N 2/30

(54) **FAHRZEUGSITZ, INSBESONDERE FÜR KRAFTFAHRZEUG**
VEHICLE SEAT, PARTICULARLY FOR A MOTOR VEHICLE
SIEGE DE VEHICULE, NOTAMMENT POUR AUTOMOBILE

(30) Priorität: 05.05.2004 DE 102004022706
(43) Veröffentlichungstag der Anmeldung: 24.01.2007
(73) Patentinhaber: Johnson Controls GmbH, 51399 Burscheid (DE)
(72) Erfinder: ABRAHAM, James, 51399 Burscheid (DE)
(74) Vertreter: Hemmelmann, Klaus
(86) Internationale Anmeldenummer: PCT/EP2005/004780
(87) Internationale Veröffentlichungsnummer: WO 2005/108150

(56) Entgegenhaltungen:
- EP-A- 0 358 285
- WO-A-03/016090
- DE-A1- 10 062 125
- DE-C1- 19 522 685
- US-B1- 6 231 103

## Beschreibung

Die Erfindung betrifft einen Fahrzeugsitz, insbesondere für ein Kraftfahrzeug, mit einem Sitzteil und einer Rückenlehne, welcher aus einer in Fahrtrichtung ausgerichteten Gebrauchsstellung um eine im Wesentlichen vertikale Schwenkachse zur Seite hin in eine die Sitzbelegung erleichternde Einstiegsstellung verschwenkbar ist, sowie ein hiermit ausgestattetes Fahrzeug.

### Stand der Technik

In der Druckschrift WO 03/016090 A2 wird ein Fahrzeugsitz der eingangs genannten Art offenbart. Der Fahrzeugsitz ist am Fahrzeugboden um eine Vertikalachse drehbar gelagert und mit der nach hinten aufschwenkenden Fahrzeugtür über eine Kulissenführung mechanisch gekoppelt. Beim Öffnen der Tür wird der Fahrzeugsitz aus seiner Gebrauchsstellung, in welcher der Sitzinsasse in Fahrtrichtung blickt, zur Seite in eine den Einstieg erleichternde Einstiegsstellung verdreht.

Aus der Patentschrift EP 0 358 285 B1 ist ein weiterer gattungsgemäßer Fahrzeugsitz für ein dem zum Transport von Personen dienendes Kraftfahrzeug mit zwei seitlichen Schiebetüren bekannt. Das Kraftfahrzeug ist mit Vordersitzen ausgestattet, die jeweils aus ihrer Gebrauchsstellung um einen Winkel von 45° zur Öffnung der Schiebetüren hin in eine Stellung verschwenkbar sind, die insbesondere älteren oder behinderten Passagieren ein erleichtertes Belegen des Sitzes ermöglicht. Die Vordersitze sind ferner aus ihrer Gebrauchsstellung nach leichtem Vorschwenken der Rückenlehne zum Cockpit hin in eine "Easy-Entry-Position" verschiebbar, welche in an sich bekannter Weise den Zugang zu einer konventionellen Rücksitzbank ermöglicht.

Das in diesen Druckschriften offenbarte Fahrzeuginnenraumkonzept weist jedoch keine Funktion auf, in welcher die Fahrzeugsitze in den freien Raum vergrößernde Stellungen bringbar sind, um das Ladevolumen des Fahrzeugs zu vergrößern.

### Aufgabe

Der Erfindung liegt die Aufgabe zugrunde, die Variabilität des aus dem Stand der Technik bekannten Sitzkonzepts zu verbessern.

### Lösung

Die Aufgabe wird erfindungsgemäß dadurch gelöst, dass der Fahrzeugsitz aus der Gebrauchsstellung alternativ in eine den freien Fahrzeuginnenraum vergrößernde Cargostellung verlagerbar ist, wobei das Sitzteil des Fahrzeugsitzes für die Verlagerung in die Cargostellung in eine im Wesentlichen vertikale, rückenlehnenparallele Lage hochklappbar und der Fahrzeugsitz nach dem Hochklappen des Sitzteils um die im Wesentlichen vertikale Schwenkachse zur Seite hin in die Cargostellung drehbar ist. Für die Verlagerung des Sitzteils in die Cargostellung ist dieses in eine im Wesentlichen vertikale, rückenlehnenparallele Lage hochklappbar.

Nachfolgend kann der Fahrzeugsitz zur Seite hin um einen Winkel von vorzugsweise 90° nach vorne oder hinten in die Cargostellung gedreht werden.

In dieser Cargostellung wird der Sitz beispielsweise in eine Position gebracht, in welcher er ein Beladen des Fahrzeugbodens nicht oder nur unwesentlich behindert, oder er wird durch eine entsprechende Kinematik selber Teil des Ladebodens.

Der Fahrzeugsitz ist dabei mit Vorteil um die im Wesentlichen vertikale Schwenkachse um 30° bis 60°, insbesondere etwa 45°, zur Seite hin in die Einstiegsstellung verschwenkbar. Diese Winkelverstellung ist einerseits auch bei Fahrzeugen mit konventioneller Türanordnung mit vertretbarem Aufwand realisierbar, erleichtert das Besteigen des Sitzes von einer Position außerhalb des Fahrzeuginnenraums her jedoch bereits erheblich.

Die Schwenkachse, um welche der Sitz in die Einstiegsstellung gedreht wird, verläuft vorzugsweise im hinteren, außenliegenden Seitenbereich des Fahrzeugsitzes. Dort ist sowohl sitz- als auch karosserieseitig ausreichender Bauraum vorhanden, ferner erfordert die Integration eines Sitzes mit dieser Kinematik in Karosserien mit herkömmlicher Türanordnung bei dieser Ausbildung einen relativ geringen Aufwand.

Mit Blick auf den baulichen Aufwand ist eine Ausbildung der Erfindung besonders günstig, bei welcher die Drehachse für die Drehung des Fahrzeugsitzes aus der Gebrauchsstellung in die Cargostellung mit der Schwenkachse des Fahrzeugsitzes zum Verschwenken aus der Gebrauchsstellung in die Einstiegsstellung zusammenfällt.

Die Erfindung ist mit besonderem Vorteil bei einem Fahrzeugsitz umsetzbar, welcher Teil einer Fahrzeug-Rücksitzbank eines vorzugsweise vier- oder fünftürigen Fahrzeugs ist. Die Rücksitzbank kann dabei in mindestens zwei, vorzugsweise drei nebeneinander angeordnete Fahrzeugsitze gegliedert sein, von denen die außenliegenden Fahrzeugsitze in Richtung der zugeordneten Türöffnungen der Fahrzeugkarosserie in die Einstiegsstellung schwenkbar sind. Zum Erreichen der Cargostellung werden derartige Fahrzeugsitze bevorzugt nach dem Hochklappen der Sitzteile vor die gleiche Türöffnung gedreht.

Der erfindungsgemäße Fahrzeugsitz kann hinsichtlich seiner Variabilität ferner dadurch nochmals verbessert werden, dass das Sitzteil, vorzugsweise mittels eines Spindelantriebs, aus seiner Gebrauchslage in eine hierzu parallele Kindersitzlage anhebbar ist. Auch bei Ausnutzung der Kindersitzfunktion erleichtert weiterhin die Einstiegsstellung des Fahrzeugsitzes dessen Belegung.

### Figuren

Die Figuren stellen beispielhaft und schematisch eine Ausführung der Erfindung dar.

### Es zeigen:

- Fig. 1: eine Aufsicht auf ein erfindungsgemäß ausgestattetes Fahrzeug mit einem Seitensegment der Rückbank in Einstiegsstellung
- Fig. 2: eine Aufsicht auf das gleiche Fahrzeug mit Rückbank in Cargostellung
- Fig. 3: eine perspektivische Ansicht des Seitensegments in Gebrauchsstellung
- Fig. 4: das gleiche Seitensegment in einer Zwischenstellung vor dem Drehen in die Cargostellung

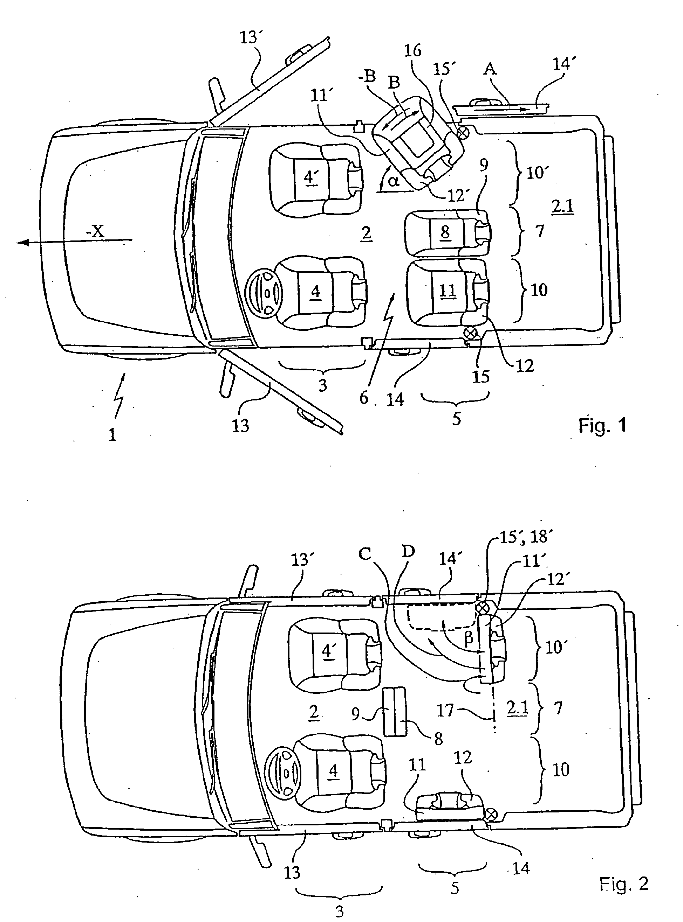

Das in Fig. 1 dargestellte Kraftfahrzeug 1 weist einen Fahrzeuginnenraum 2 mit einer vorderen Sitzreihe 3 aus zwei Einzelsitzen 4, 4' und eine hintere Sitzreihe 5 mit einer Rücksitzbank 6 auf. Die vorderen Einzelsitze 4, 4' für Fahrer bzw. Beifahrer sind im Ausführungsbeispiel konventionell ausgebildet und werden daher im Weiteren nicht näher beschrieben.

Die Rücksitzbank 6 ist dreigeteilt und weist ein schmales Mittelsegment 7 mit einem Sitzteil 8 und einer Rückenlehne 9 sowie zwei spiegelbildlich ausgeführte Fahrzeugsitze in Form von Seitensegmenten 10, 10' mit Sitzteilen 11, 11' und Rückenlehnen 12, 12' auf.

Der Fahrzeuginnenraum 2 ist im Bereich der vorderen Sitzreihe 3 über seitliche Schwenktüren 13, 13` und im Bereich der hinteren Sitzreihe 5 über seitliche Schiebetüren 14, 14' zugänglich, die zum Öffnen nach hinten verschiebbar sind (Pfeil A). In Fig. 1 befindet sich das Seitensegment 10 bei geschlossener Schiebetür 14 in Gebrauchsstellung, bei welcher die Rückenlehne 12 im Wesentlichen senkrecht und das Sitzteil 11 im Wesentlichen waagerecht derart ausgerichtet sind, dass der Sitzinsasse in Fahrtrichtung (-X-Richtung des Fahrzeugs) blickt.

Die Seitensegmente 10, 10' sind nach dem Öffnen der Schiebetüren 14, 14' und dem Lösen einer Arretierung jeweils um eine vertikale Schwenkachse 15, 15, welche im hinteren, außenliegenden Bereich der Seitenelemente 10, 10` verläuft, um einen Winkel α von 45° in Richtung des Pfeils B nach außen schwenkbar, wie für das Seitenelement 10' dargestellt. In dieser gleichfalls arretierbaren Einstiegsstellung wird die Belegung des Seitenelements 10' erleichtert, und zwar sowohl für erwachsene Sitzinsassen als auch für Kinder, welche in einem auf dem Seitenelement 10' verankerten Kindersitz 16 plaziert werden sollen.

Nach der Belegung des Seitensegments 10' wird dieses nach Lösen der Arretierung in Richtung des Pfeils -B manuell oder mittels eines elektrischen Antriebs in die Gebrauchsstellung zurückgeschwenkt. Die Sitzinsassen können zuvor durch ein in das Seitensegment 10' integriertes Gurtsystem gesichert werden. Alternativ ist denkbar, das Gurtsystem an der Fahrzeugkarosserie zu verankern und erst in Gebrauchsstellung zugänglich zu machen.

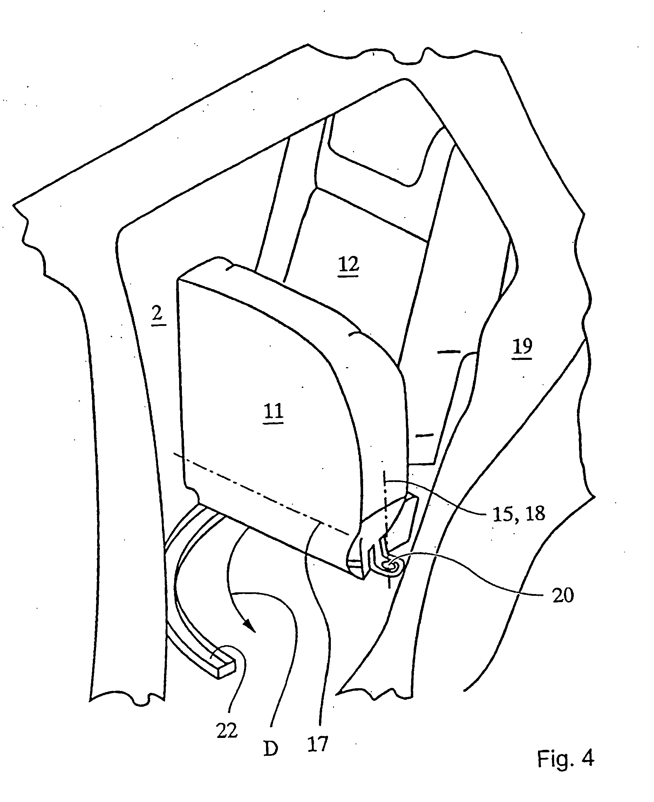

Um den Laderaum des Fahrzeugs zu vergrößern, lassen sich wahlweise einzelne oder alle Seitensegmente 10, 10' sowie das Mittelsegment 7 der Rückenlehne 6 in eine Cargostellung verlagern, die in Fig. 2 gezeigt wird. Um das Seitensegment 10' aus der Gebrauchsstellung heraus in die Cargostellung zu überführen, wird zunächst das Sitzteil 11' um eine im Bereich des Übergangs zwischen Sitzteil 11' und Rückenlehne 12' angeordnete horizontale, quer zur Fahrtrichtung -X verlaufende Klappachse nach oben geklappt (Pfeil C), bis das Sitzteil 11' an der Rückenlehne 12' anliegt (siehe auch Fig. 4). Anschließend wird das Seitensegment 10' um eine Drehachse 18` um einen Winkel β von 90° nach außen vor die Karosserieöffnung für die Schiebetür 14' gedreht (Pfeil D) und dort verankert. Im Ausführungsbeispiel fallen die Drehachse 18' für die Verlagerung in die Cargostellung und die Schwenkachse 15' für die Überführung in die Einstiegsstellung zur Verringerung des Bauaufwands zusammen und sind im Fahrzeuginnenraum 2 ortfest angeordnet. In gleicher Weise kann mit dem Seitensegment 10 verfahren werden. Die Zurückverlagerung der Seitensegmente 10, 10' in die Gebrauchsstellung erfolgt sinngemäß in umgekehrter Reihenfolge.

Das mittlere Segment 7 wird aus der Gebrauchsstellung in bekannter Weise dadurch in die Cargostellung überführt, dass zunächst die Rückenlehne 9 nach vorne auf das Sitzteil 8 geklappt und das so entstandene Paket nach vorne in eine senkrechte Cargostellung geschwenkt wird, in welcher es in etwa zwischen den Rückenlehnen der vorderen Einzelsitze 4, 4' angeordnet ist.

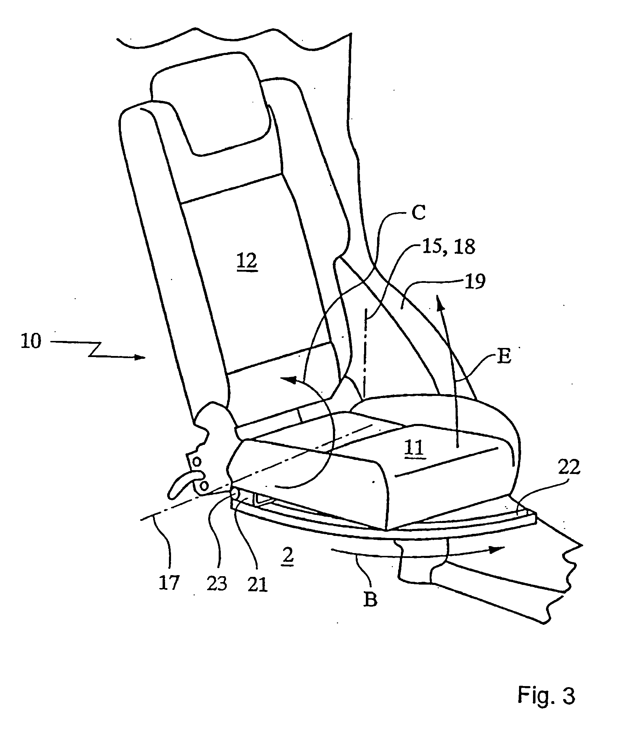

Fig. 3 stellt eine Ansicht des in Gebrauchsstellung befindlichen Seitensegments 10 vom Fahrzeuginnenraum 2 des Fahrzeugs aus dar, während Fig. 4 einen Blick von außen durch die Öffnung der Schiebetür 14 hindurch in den Fahrzeuginnenraum 2 mit Seitensegment 10 in einer Zwischenstellung zeigt.

Das Seitensegment 10 ist im hinteren, der Seitenwand der Fahrzeugkarosserie 19 zugewandten, Bereich des Sitzteils 11 mit einem Drehlager 20 ausgestattet, welches die vertikale Schwenkachse 15 bzw. Drehachse 18 ausbildet. Der entgegengesetzte Teil des Sitzteils 11 ist mit einem Gleitlager 21 versehen, welches in einer die Schwenkachse 15 unterhalb des Sitzteils kreisbogenförmig umgebenden Kulisse 22 läuft. Das Gleitlager 21 weist ferner in der Kulisse 22 wirkende Arretiermittel auf, die mittels eines Druckknopfs 23 zum Schwenken des Seitensegments 10 in die Einstiegs- oder Cargostellung lösbar sind. Das Seitensegment 10 ist außerdem mit Lagermitteln versehen, welche ein Hochklappen des Sitzteils 11 um die Klappachse 17 in eine Zwischenstellung (Fig. 4) und aus dieser heraus in die Cargostellung ermöglichen.

Die Erfindung ist selbstverständlich nicht auf das Ausführungsbeispiel beschränkt. So können insbesondere nicht nur Rücksitzsegmente, sondern auch Vordersitze erfindungsgemäß ausgerüstet werden.

### Bezugszeichen

- 1: Kraftfahrzeug
- 2: Fahrzeuginnenraum
- 3: vordere Sitzreihe
- 4: Einzelsitze
- 5: hintere Sitzreihe
- 6: Rücksitzbank
- 7: Mittelsegment
- 8: Sitzteil
- 9: Rückenlehne
- 10: Seitensegment
- 11: Sitzteil
- 12: Rückenlehne
- 13: Schwenktüren
- 14: Schiebetüren
- 15; 15': Schwenkachse
- 16: Kindersitz
- 17: Klappachse
- 18: Drehachse
- 19: Fahrzeugkarosserie
- 20: Drehlager
- 21: Gleitlager
- 22: Kulisse
- 23: Druckknopf

## Patentansprüche

1. Fahrzeugsitz, insbesondere für ein Kraftfahrzeug, mit einem Sitzteil (11) und einer Rückenlehne (12), welcher aus einer in Fahrtrichtung ausgerichteten Gebrauchsstellung um eine im Wesentlichen vertikale Schwenkachse (15, 15') zur Seite hin in eine die Sitzbelegung erleichternde Einstiegsstellung verschwenkbar ist, **dadurch gekennzeichnet, dass** der Fahrzeugsitz aus der Gebrauchsstellung alternativ in eine den freien Fahrzeug Fahrzeuginnenraum (2) vergrößernde Cargostellung verlagerbar ist, wobei das Sitzteil (11) des Fahrzeugsitzes für die Verlagerung in die Cargostellung in eine im Wesentlichen vertikale, rückenlehnenparallele Lage hochklappbar und der Fahrzeugsitz nach dem Hochklappen des Sitzteils (11) um die im Wesentlichen vertikale Schwenkachse (15, 15') zur Seite hin in die Cargostellung drehbar ist.

2. Fahrzeugsitz nach Anspruch 1, **dadurch gekennzeichnet, dass** der Fahrzeugsitz um die im Wesentlichen vertikale Schwenkachse (15, 15') um 30° bis 60°, insbesondere etwa 45°, zur Seite hin in die Einstiegsstellung verschwenkbar ist.

3. Fahrzeugsitz nach Anspruch 2, **dadurch gekennzeichnet, dass** die Schwenkachse (15, 15') im hinteren, außenliegenden Seitenbereich des Fahrzeugsitzes verläuft.

4. Fahrzeugsitz nach Anspruch 1 bis 3, **dadurch gekennzeichnet, dass** die Drehbewegung in die Cargostellung um die im Wesentlichen vertikale Drehachse, vorzugsweise um einen Winkel von etwa 90°, erfolgt.

5. Fahrzeugsitz nach Anspruch 4, **dadurch gekennzeichnet, dass** die Drehachse für die Drehung des Fahrzeugsitzes aus der Gebrauchsstellung in die Cargostellung mit der Schwenkachse (15, 15') des Fahrzeugsitzes zum Verschwenken aus der Gebrauchsstellung in die Einstiegsstellung zusammenfällt.

6. Fahrzeugsitz nach einem der vorhergehenden Ansprüche, **dadurch gekennzeichnet, dass** der Fahrzeugsitz Teil einer Fahrzeug-Rücksitzbank (6) ist.

7. Fahrzeugsitz nach Anspruch 6, **dadurch gekennzeichnet, dass** die Rücksitzbank (6) in mindestens zwei, vorzugsweise drei nebeneinander angeordnete Fahrzeugsitze (Seitensegmente (10), Mittelsegment (7)) gegliedert ist, von denen die außenliegenden Fahrzeugsitze (Seitensegmente (10)) in Richtung der zugeordneten Türöffnungen der Fahrzeugkarosserie in die Einstiegsstellung schwenkbar sind.

8. Fahrzeugsitz nach Anspruch 7, **dadurch gekennzeichnet, dass** die Fahrzeugsitze nach dem Hochklappen der Sitzteile (11) vor die gleiche Türöffnung in Cargostellung drehbar sind.

9. Fahrzeugsitz nach einem der vorhergehenden Ansprüche, **dadurch gekennzeichnet, dass** das Sitzteil (11), vorzugsweise mittels eines Spindelantriebs, aus seiner Gebrauchslage in eine hierzu parallele Kindersitzlage anhebbar ist.

10. Fahrzeug, insbesondere Kraftfahrzeug, mit einem Fahrzeugsitz nach einem der vorhergehenden Ansprüche.

## Claims

1. Vehicle seat, particularly for a motor vehicle, with a seat part (11) and a backrest (12) which can be pivoted about an essentially vertical pivot axis (15, 15') from a use position oriented in the direction of travel to the side into an entry position making it easier to get to the seat, **characterized in that** the vehicle seat can alternatively be shifted from the use position into a cargo position enlarging the free interior (2) of the vehicle, for shifting into the cargo position the seat part (11) of the vehicle seat being foldable upward into an essentially vertical position parallel to the backrest and after the seat part (11) is folded upward, the vehicle seat being rotated about the essentially vertical pivot axis (15, 15') to the side into the cargo position.

2. Vehicle seat according to Claim 1, **characterized in that** the vehicle seat can be pivoted about the essentially vertical pivot axis (15, 15'), about 30° to 60°, in particular approximately 45°, to the side into the entry position.

3. Vehicle seat according to Claim 2, **characterized in that** the pivot axis (15,'15') runs in the rear, outer side region of the vehicle seat.

4. Vehicle seat according to Claim 1 to 3, **characterized in that** the rotational movement into the cargo position takes place about the essentially vertical axis of rotation, preferably about an angle of approximately 90°.

5. Vehicle seat according to Claim 4, **characterized in that** the axis of rotation for rotating the vehicle seat from the use position into the cargo position coincides with the pivot axis (15, 15') of the vehicle seat for pivoting it from the use position into the entry position.

6. Vehicle seat according to one of the preceding claims, **characterized in that** the vehicle seat is part of a vehicle rear seat bench (6).

7. Vehicle seat according to Claim 6, **characterized in that** the rear seat bench (6) is divided into at least two, preferably three, vehicle seats (side segments (10), central segment (7)) arranged next to one another, of which the outer vehicle seats (side segments (10)) can be pivoted in the direction of the associated door openings of the vehicle body into the entry position.

8. Vehicle seat according to Claim 7, **characterized in that**, after the seat parts (11) are folded upward, the vehicle seats can be rotated in front of the same door opening into the cargo position.

9. Vehicle seat according to one of the preceding claims, **characterized in that** the seat part (11) can be raised, preferably by means of a spindle drive, from its use position into a child seat position parallel thereto.

10. Vehicle, particularly a motor vehicle, with a vehicle seat according to one of the preceding claims.

## Revendications

1. Siège de véhicule, en particulier pour un véhicule automobile, comprenant une partie de siège (11) et un dossier (12), qui peut pivoter d'une position d'utilisation orientée dans la direction de conduite autour d'un axe de pivotement essentiellement vertical (15, 15') vers le côté dans une position d'accès facilitant l'accès du siège, **caractérisé en ce que** le siège du véhicule peut être déplacé de la position d'utilisation de manière alternée dans une position de chargement augmentant l'espace interne libre du véhicule (2), la partie de siège (11) du siège du véhicule pouvant être rabattue vers le haut pour le déplacement dans la position de chargement dans une position essentiellement verticale parallèle au dossier, et le siège du véhicule pouvant être tourné après le rabattement vers le haut de la partie de siège (11) autour de l'axe de pivotement essentiellement vertical (15, 15') vers le côté dans la position de chargement.

2. Siège de véhicule selon la revendication 1,
**caractérisé en ce que** le siège de véhicule peut pivoter autour de l'axe de pivotement essentiellement vertical (15, 15') de 30° à 60°, en particulier d'environ 45° vers le côté dans la position d'accès.

3. Siège de véhicule selon la revendication 2,
**caractérisé en ce que** l'axe de pivotement (15, 15') se prolonge dans la région latérale arrière extérieure du siège de véhicule.

4. Siège de véhicule selon les revendications 1 à 3, **caractérisé en ce que** le mouvement de rotation dans la position de chargement s'effectue autour de l'axe de rotation essentiellement vertical, de préférence suivant un angle d'environ 90°.

5. Siège de véhicule selon la revendication 4,
**caractérisé en ce que** l'axe de rotation pour la rotation du siège du véhicule de la position d'utilisation dans la position de chargement coïncide avec l'axe de pivotement (15, 15') du siège du véhicule pour le pivotement de la position d'utilisation dans la position d'accès.

6. Siège de véhicule selon l'une quelconque des revendications précédentes, **caractérisé en ce que** le siège de véhicule fait partie d'une banquette de siège arrière (6) du véhicule.

7. Siège de véhicule selon la revendication 6,
**caractérisé en ce que** la banquette de siège arrière (6) est divisée en au moins deux, de préférence trois, sièges de véhicule juxtaposés (segments latéraux (10), segment central (7)), dont les sièges de véhicule extérieurs (segments latéraux (10)) peuvent pivoter dans la direction des ouvertures de porte associées de la carrosserie du véhicule dans la position d'accès.

8. Siège de véhicule selon la revendication 7,
**caractérisé en ce que** les sièges de véhicule peuvent pivoter dans la position de chargement après le rabattement vers le haut des parties de siège (11) avant la même ouverture de porte.

9. Siège de véhicule selon l'une quelconque des revendications précédentes, **caractérisé en ce que** la partie de siège (11) peut être soulevée, de préférence au moyen d'un entraînement à broche, de sa position d'utilisation dans une position de siège d'enfant parallèle à celle-ci.

10. Véhicule, notamment véhicule automobile, comprenant un siège de véhicule selon l'une quelconque des revendications précédentes.
